# EUROPÄISCHE PATENTSCHRIFT

(11) **EP 3 139 074 B1**
(45) Veröffentlichungstag und Bekanntmachung des Hinweises auf die Patenterteilung: **05.12.2018**
(21) Anmeldenummer: 16181286.2
(22) Anmeldetag: 26.07.2016
(51) Int. Cl.: F16K 31/46, E03B 7/10, E03B 9/02

(54) **FROSTSICHERE AUSSENARMATUR UND VERFAHREN ZUR MONTAGE DERSELBEN**
FROST-PROOF EXTERIOR FITTING AND METHOD OF MOUNTING THE SAME
ARMATURE EXTERIEURE PROTEGEE CONTRE LE GEL ET SON PROCEDE DE MONTAGE

(30) Priorität: 31.07.2015 DE 202015005444 U
(43) Veröffentlichungstag der Anmeldung: 08.03.2017
(73) Patentinhaber: Gebr. Kemper GmbH + Co. KG Metallwerke, 57462 Olpe (DE)
(72) Erfinder: Fries, Stefan, 57462 Olpe (DE)
(74) Vertreter: Grünecker Patent- und Rechtsanwälte PartG mbB

(56) Entgegenhaltungen:
- EP-A2- 1 666 674
- EP-A2- 2 479 462
- DE-A1-102008 009 081
- US-A- 628 023
- US-A- 4 538 637
- US-A- 5 158 105

## Beschreibung

Die vorliegende Erfindung betrifft eine frostsichere Auslaufarmatur mit den oberbegrifflichen Merkmalen aus Anspruch 1. Eine solche Auslaufarmatur ist aus der EP 1 666 674 A2 bekannt.

Die erfindungsgemäße frostsichere Auslaufarmatur hat ein Ventilgehäuse, welches einen Ventilsitz ausbildet und üblicherweise von einem Befestigungskranz zur verdrehfesten Montage des Ventilgehäuses umgeben ist. Dieses Ventilgehäuse befindet sich üblicherweise im Gebäudeinneren, jedenfalls mit erheblichem Abstand zu der Gebäudeaußenwand mit dem Ziel, dass die Temperatur im Bereich des Ventilsitzes zu keiner Zeit den Gefrierpunkt des Wassers erreicht. Die frostsichere Auslaufarmatur hat des Weiteren ein Auslaufgehäuse, welches in der Regel mit einer Auslauftülle und einem Belüfter versehen ist und in dem ein Ventiloberteil mit einer axial beweglichen Stellspindel und in der Regel auch einer Handhabe montiert ist. Dieses Auslaufgehäuse wird bei der gattungsgemäßen frostsicheren Auslaufarmatur an der Gebäudeaußenwand montiert. Zur Überbrückung des Abstandes zwischen dem Auslaufgehäuse und dem Ventilgehäuse ist ein Zwischenrohr vorgesehen, welches im Stand der Technik als Schutzrohr, in das eine Zwischenspindel aufgenommen ist, ausgeformt ist. Des Weiteren ist die Zwischenspindel der gattungsgemäßen Auslaufarmatur als Hohlspindel ausgebildet. Die Zwischenspindel dient im Stand der Technik als Stellspindel, welche axial verschieblich relativ zu dem Ventilgehäuse gehalten ist und mit dem Ventilsitz zusammenwirkt, um die Auslaufarmatur abzusperren.

Ähnliche Auslaufarmaturen sind beispielsweise aus der DE 10 2008 009 081 A1, der EP 2 479 462 A2 bzw. EP 1 122 476 A, dem DE 200 01 883 U1 oder aber dem DE 298 20 782 U1 bekannt.

Die Auslaufarmatur ist üblicherweise so ausgebildet, dass beim Absperren der Auslaufarmatur durch Anlage des Ventilkörpers gegen den Ventilsitz der Belüfter zwangsgeführt, oder aufgrund einer Druckdifferenz aktiviert wird, so dass ein Ringraum zwischen der Zwischenspindel und dem Zwischenrohr entleert wird. Mit anderen Worten wird der gesamte Bereich zwischen dem Ventilsitz und einer Auslauftülle der Auslaufarmatur entleert. Dabei besteht das Problem, dass mitunter an einer Auslauftülle des Auslaufgehäuses unter Frostbedingungen noch ein Schlauch oder dergleichen angeschlossen ist, der selber unter Druck steht. Folglich kann das Stromab des Ventilkörpers in der Auslaufarmatur befindliche Wasser nicht abfließen. Es besteht die Gefahr eines Einfrierens der Armatur und der Frostschäden.

Im Hinblick darauf sind zwar in der Vergangenheit Maßnahmen vorgeschlagen worden, wie eine sichere Entleerung der Auslaufarmatur unter sämtlichen Betriebsbedingungen gewährleistet werden kann. Diese lassen aber gleichwohl Bedienungsfehler zu oder führen zu einer Kosten treibenden Konstruktion.

Aber auch die vorbekannten Auslaufarmaturen bieten Raum zur Verbesserung.

Der vorliegenden Erfindung liegt die Aufgabe zugrunde, eine Auslaufarmatur anzugeben, die weniger anfällig gegen Frostschäden bei unsachgemäßer Handhabung ist. Des Weiteren will die vorliegende Erfindung eine frostsichere Auslaufarmatur angeben, die sich kostengünstig und einfach herstellen lässt. Auch will die vorliegende Erfindung ein Verfahren zur Montage einer frostsicheren Armatur der eingangs genannten Art angeben.

Zur Lösung des obigen Problems wird mit der vorliegenden Erfindung eine frostsichere Armatur mit den Merkmalen von Anspruch 1 vorgeschlagen. Bei dieser frostsicheren Auslaufarmatur ist die Zwischenspindel durch ein Kunststoffrohr gebildet und formt einen Strömungsweg für das Fluid von dem Ventilgehäuse zu dem Auslaufgehäuse aus.

Bei der erfindungsgemäßen frostsicheren Armatur bewirkt ein die Zwischenspindel ausbildendes Kunststoffrohr, dass der Strömungsweg innerhalb der Hohlspindel vorgesehen ist, und zwar über die wesentliche axiale Erstreckung der frostsicheren Armatur bis hin zu demjenigen Bereich, in dem üblicherweise Frost auftreten kann, d.h. bis hin zu dem Auslaufgehäuse. Sollte durch Fehlbedienung einmal der Fall gegeben sein, dass bei winterlichen Bedingungen Wasser in der Armatur stehen bleibt, so kann der Kunststoff die sich beim Einfrieren ergebende Volumenvergrößerung kompensieren, ohne Schaden zu nehmen, wie dies bei metallischen Rohren der Fall ist. Die Hohlspindel dehnt sich bei dem Einfrieren aus (Aufnahme der VolumenZunahme von Eis); anschließend zieht sich die Spindel wieder zusammen auf den Ursprungszustand. Die Kunststoff-Zwischenspindel ist bevorzugt aus einem hochwertigen technischen Kunststoff, wie beispielsweise POM, PE oder PA, hergestellt. Der Kunststoff kann gewisse Füllanteile in sich aufnehmen, beispielsweise mit Fasern oder Partikeln gefüllt und/oder verstärkt sein. Die hohle Zwischenspindel ist üblicherweise mit radialen Abstand zu den umgebenden Gehäuseteilen, d.h. dem Zwischenrohr und den Gehäusewänden des Auslaufgehäuses vorgesehen. Dabei ist üblicherweise ein zusammenhängender Ringraum vorgesehen, der sich üblicherweise im Wesentlichen über die gesamte Länge der Zwischenspindel ergibt. Lediglich die freien und an die übrigen Teile der Auslaufarmatur angeschlossenen Enden der Zwischenspindel sind üblicherweise radial gefasst, um mit der Spindel des Ventiloberteils auf Seiten des Auslaufgehäuses bzw. dem Ventilkörper im Bereich des Ventilgehäuses verbunden zu werden.

Dieser Ringraum dient der thermischen Isolation gegenüber dem wasserführenden inneren Bereich, speziell der Hohlspindel. Denn das Zwischenrohr ragt üblicherweise über eine Gebäudeaußenwand hinaus und ist dort mit dem Auslaufgehäuse unmittelbar verbunden. So wird zumindest der gebäudewandaußenseitige Bereich des Zwischenrohres mit der dort wirkenden Temperatur beaufschlagt. Im Winter kann diese Temperatur deutlich unter 0 °C liegen.

Mit Blick auf die notwendige Festigkeit kann das Zwischenrohr aus Kunststoff oder mit Metall ausgebildet sein. Üblicherweise ist das Zwischenrohr unmittelbar mit dem Auslaufgehäuse verschraubt. Auch trägt das Zwischenrohr in an sich bekannter Weise üblicherweise eine Rosette, die die Bohrung der Gebäudewand gebäudeaußenseitig überragt und damit abdeckt.

Die Zwischenspindel ist vorzugsweise ein Halbzeug. Als Halbzeug wird dabei ein rohrförmiger Körper mit zylindrischer Grundform verstanden. Der zylindrische Grundkörper kann eine runde Querschnittsfläche haben. Die Außenumfangsfläche wie auch die Innenumfangsfläche des Halbzeuges mag unbearbeitet bleiben und sich insbesondere durch das Fehlen von Gewindegängen auszeichnen. Die Bearbeitung der Zwischenspindel kann sich darauf beschränken, dass ein Rohr auf Länge gebracht und bevorzugt zumindest auslaufgehäuseseitig mit zumindest einer Radialbohrung versehen wird, um einen Auslauf aus dem Innern der Hohlspindel zu schaffen.

Auf der Einlaufseite, d.h. auf Seiten des Ventilsitzes ist üblicherweise eine Verbindungshülse vorgesehen, die in der Regel in die Hohlspindel eingreift und mit einem Kragen überragt, sodass die Verbindungshülse axial fixiert ist. Die Verbindungshülse kann in die Hohlspindel eingepresst sein. Die Verbindungshülse stellt üblicherweise den einlassseitigen Anschluss der als Rohr ausgebildeten Zwischenspindel zu einem Ventilkörper bereit. Dieser Ventilkörper ist gegenüber dem Zwischenrohr abgedichtet, sodass einlassseitig eintretendes Fluid nicht an dem Ventilkörper vorbei in den Ringspalt zwischen der Zwischenspindel und dem Zwischenrohr gelangen kann. Der Ventilkörper ist üblicherweise axial relativ zu dem Zwischenrohr beweglich, um einerseits eine Verschlussstellung vorzugeben, bei welcher der Ventilkörper an einem Ventilsitz dichtend zur Anlage gelangt, und andererseits die Strömung durch die Auslaufarmatur in einer zweiten, gegenüber dem Einlassende zurückgezogenen Stellung zu ermöglichen, bei welcher der Ventilkörper von dem Ventilsitz beabstandet ist. Der Ventilkörper bildet üblicherweise einen Einlass aus, der in das Innere der Zwischenspindel führt, sodass das einlassseitig in die Armatur eintretendes Fluid in den durch die Zwischenspindel gebildeten Rohrraum gelangen kann.

Zum Verschluss der Armatur hat der Ventilkörper üblicherweise einen elastischen Dichtkörper, beispielsweise einen Dichtring, der den Einlass entgegen der Strömungsrichtung des in die Armatur eintretenden Fluides überragt und der zum Verschluss der Auslaufarmatur mit einem Ventilsitzgehäuse zusammenwirkt. Dieses Ventilsitzgehäuse ist an einem separaten Bauteil ausgeformt und gegenüber dem Zwischenrohr abgedichtet üblicherweise unmittelbar in das Zwischenrohr eingesetzt und daran befestigt.

Das Zwischenrohr ist üblicherweise verdrehfest mit dem Ventilsitzgehäuse verbunden. Auch der Ventilkörper ist üblicherweise verdrehfest zu dem Zwischenrohr vorgesehen, die Zwischen-Spindel ist am Oberteil befestigt; bei einem steigenden Oberteil dreht sich die Zwischen-Spindel bei Betätigung der Armatur mit; bei einem nicht steigenden Oberteil ist die Zwischen-Spindel verdrehfest. Der Dichtkörper kann dabei gegen eine Ringfläche des Ventilsitzgehäuses zur Anlage gebracht werden, um die Armatur abzusperren. Ebenso gut kann der Dichtkörper auch gegen eine Innenumfangsfläche, d.h. eine Zylinderfläche dichtend angelegt werden, die durch das Ventilsitzgehäuse gebildet wird.

Der eingangsseitig vorgesehene Rückflussverhinderer ist üblicherweise als Rückflussverhinderer-Patrone mit einem in der Patronen beweglich vorgesehenen und unter Federvorspannung gesetzten Rückflussverhinderer-Ventilkörper versehen. Die Rückflussverhinderer-Patrone ist dabei üblicherweise dichtend in einem zylindrischen Hohlraum aufgenommen, der zwischen der Verbindungshülse und dem Einlass ausgespart ist. Dieser zylindrische Hohlraum kann durch den Ventilkörper ausgeformt sein.

Gemäß der vorliegenden Erfindung ist in dem Auslaufgehäuse ein Ventiloberteil mit einer Führungshülse und einer daran verdrehbar gelagerten, jedoch axial festgelegt gehaltenen Stellspindel vorgesehen. Die Führungshülse ist fest mit dem Auslaufgehäuse angeordnet, üblicherweise mit dem Auslaufgehäuse verschraubt. Die Führungshülse führt ein Stellelement, welches in der Regel mit der Zwischenspindel verbunden und axial verschieblich in dem Auslaufgehäuse vorgesehen ist. In der Regel ist das Stellelement verdrehfest in dem Auslaufgehäuse angeordnet, sodass durch eine Drehung der üblicherweise mit einem Drehgriff verbundenen Stellspindel das mit der Stellspindel im Gewindeeingriff stehende Stellelement axial verschoben wird, wodurch die Zwischenspindel ebenfalls axial verschoben wird und damit auch der einlassseitig mit der Zwischenspindel verbundene Ventilkörper.

Die aus der Zwischenspindel ausgeleitete Flüssigkeit wird durch einen Auslass abgeleitet, der in dem Stellelement ausgespart ist. Üblicherweise sind mehrere Auslässe auf dem Umfang des Stellelementes verteilt vorgesehen. Eine entsprechende Ausgestaltung ergibt sich bevorzugt auch an der Einlassseite mit mehreren auf dem Umfang des Ventilkörpers verteilt vorgesehenen Einlässen.

Der Auslass ist zwischen zwei Dichtelementen vorgesehen, über welche das Stellelement gegenüber einer Bohrung des Auslaufgehäuses abgedichtet ist. Das entsprechende Dichtelement kann entweder unmittelbar an dem Auslaufgehäuse dichtend anliegen oder aber unter Zwischenlage eines anderen Bauteils, so beispielsweise unter Zwischenlage der Führungshülse, die bei dieser Ausgestaltung dichtend in das Auslaufgehäuse eingeschraubt und einlassseitig mit zumindest einem Dichtring versehen ist, der mit der äußeren Umfangsfläche des in die Führungshülse eingreifenden Stellelementes zusammenwirkt.

Gemäß einer bevorzugten Weiterbildung der vorliegenden Erfindung ist ein einseitig in die Zwischenspindel eingreifendes Zentrierelement vorgesehen. Bei diesem Zentrierelement handelt es sich aus fertigungstechnischen Gründen bevorzugt um ein zunächst separates Bauelement, welches üblicherweise dichtend in das Stellelement eingesetzt ist und in die hohle Zwischen-spindel hineinragt, um diese zu zentrieren. So weist das Zentrierelement vorzugsweise auf Höhe des Auslasses bevorzugt eine, üblicherweise mehrere Radialbohrungen auf, sodass das aus der Zwischenspindel austretende Fluid zunächst durch die Radialbohrung und daraufhin gegebenenfalls durch eine damit fluchtende Bohrung in der Zwischenspindel und durch den Auslass abgeleitet werden kann. Die Radialbohrungen und die Auslässe sind üblicherweise radial fluchtend zueinander vorgesehen. Das Zentrierelement ist regelmäßig gegenüber dem Stellelement axial fixiert und schließt das in der Regel zunächst hohle Stellelement stirnseitig ab, sodass aus der Zwischenspindel austretendes Fluid allein durch den Auslass bzw. die Radialbohrung ausgeleitet werden kann. Die Bohrungen für den Auslass und die Radialbohrung gegebenenfalls die Bohrung oder ein Schlitz der Zwischenspindel sind üblicherweise auf Höhe einer Auslauftülle vorgesehen, über welche die Auslaufarmatur regelmäßig mit einem Schlauch verbunden ist, der in der Regel der Gartenbewässerung dient.

Mit Blick auf eine vereinfachte Fertigung der erfindungsgemäßen Auslaufarmatur besteht die hohle Zwischenspindel aus einem rohrförmigen Halbzeug. Mit Blick auf unterschiedliche Wandstärken der Gebäudewand kann das Zwischenrohr üblicherweise zum Anschluss an das Auslaufgehäuse an der entsprechenden Schnittstelle abgelängt und allein durch Verschrauben mit dem Auslaufgehäuse verbunden sein. Bei der erfindungsgemäßen Auslaufarmatur ist üblicherweise das Zwischenrohr ohne Dichtmittel mit dem Auslaufgehäuse verbunden, insbesondere verschraubt. Das auslaufseitig abgelängte Zwischenrohr muss lediglich mit der bzw. den mit den Auslässen fluchtenden Bohrungen versehen und in das Stellelement eingeschoben werden, bevorzugt in einen Ringraum zwischen dem Zentrierelement und dem Stelleelement. Die Zwischenspindel kann mit dem Stellelement über ein Zentrierelement verpresst sein.

Zur Vereinfachung der Ausgestaltung des Rückflussverhinderers wird gemäß einer bevorzugten Weiterbildung der vorliegenden Erfindung vorgeschlagen, einen ventilbelasteten Ventilkegelkörper vorzusehen, der in Richtung auf den Ventilsitz vorgespannt und in einer mit der Zwischenspindel verbundenen Ventilführungshülse geführt ist. Dieser Ventilkegelkörper trägt üblicherweise eine Dichtung, beispielsweise in Form einer Flachdichtung, die gegen den Ventilsitz angelegt wird, um die Armatur ventilgehäuseseitig abzusperren. Der Ventilkegelkörper wird vorzugsweise in einer Ventilführungshülse geführt, die stirnseitig unmittelbar in die Zwischenspindel oder eine endseitig mit der Zwischenspindel verbundene Verbindungshülse hineinragt, bei der es sich üblicherweise um ein Element handelt, welches auch Dichtringe zur Abdichtung der Zwischenhülse gegenüber dem Ventilsitzgehäuse aufweist. Diese Verbindungshülse hat dabei üblicherweise auch einen Einlass, durch den das den Ventilsitz passierende Fluid in die Zwischenspindel gelangen kann.

Die Ventilführungshülse, dient dabei üblicherweise auch der unverlierbaren Sicherung des Ventilkegelkörpers, dessen dem Ventilsitz gegenüberliegendes Ende hierfür gegenüber der Ventilführungshülse formschlüssig verriegelt ist. Diese Verriegelung kann beispielsweise durch einen verformten Endbereich des Ventilkegelkörpers gebildet sein. Dieser Endbereich ist üblicherweise als längliches Führungselement, beispielsweise Zylinder ausgebildet, der innerhalb einer dazu angepassten Bohrung der Ventilführungshülse verschieblich gelagert ist. So führt das Führungselement die Verschiebebewegung des Ventilkegelkörpers und bewirkt durch eine sehr einfache Ausgestaltung auch eine feste Verbindung zwischen dem Ventilkegelkörper und der Ventilführungshülse.

Zur weiteren Vereinfachung der Ausgestaltung wird gemäß einer bevorzugten Weiterbildung der Erfindung vorgeschlagen, die Ventilführungshülse über eine Ringschulter relativ zu der Zwischenspindel abzustützen. Diese Ringschulter führt zu einer formschlüssigen Anlage der Führungshülse gegenüber der Zwischenspindel und stützt sich gegenüber dieser axial ab. Die Gegenfläche kann dabei erneut durch die Zwischenspindel selbst oder eine Verbindungshülse gebildet sein. An der Außenseite der Ventilführungshülse ist ein Ringraum gebildet, in dem eine sich an der Ringschulter abstützende Feder vorgesehen ist. Der Ringraum ist so dimensioniert, dass er hinreichend Platz für die notwendige Bewegung der Feder bietet, diese aber auch außenumfänglich mit wenig Spiel umgibt. An der Außenseite des Ringspaltes kann die Zwischen-spindel, bevorzugt die Verbindungshülse vorgesehen sein.

Auf Seiten des Ventiloberteils ist gemäß der vorliegenden Erfindung eine in die Zwischenspindel eingreifende Spannhülse vorgesehen. Diese ist üblicherweise mit der Zwischenspindel verpressbar und greift innen in die hohle Zwischenspindel ein. Die Spannhülse ist in dem Ventiloberteil im Gewindegriff gehalten und schraubbar. Hierzu ist üblicherweise in einer an der Außenseite des Ventiloberteils freiliegenden Stellspindel eine zentrische Bohrung vorgesehen, die derart bemessen ist, dass sie mit einem Schraubendreher oder einem Imbussschlüssel durchsetzt werden kann, um die dahinter liegende Spannhülse zu erreichen, die an ihrer freien Stirnseite eine für dieses Werkzeug angepasste Werkzeugaufnahme bereitstellt. So kann die Spannhülse durch die Stellspindel hindurch mittels des Werkzeuges in dem Ventiloberteil verschraubt und damit axial verschoben werden. Das Schrauben der Gewindehülse bewirkt üblicherweise eine Bewegung der Spannhülse relativ zu dem Stellelement des Ventiloberteils, welches gemeinhin auch als Spindel bezeichnet wird.

Vorzugsweise hat dieses Stellelement einen vorderen Aufnahmeabschnitt, der zur Festlegung der Zwischenspindel an den Außenumfang der Zwischenspindel angepasst ausgebildet ist und einen Innendurchmesser hat, der dichtend an die Zwischenspindel anlegbar ist. So kann die Zwischenspindel effektiv gegenüber dem Stellelement abgedichtet werden. Zwischen dem Aufnahmeabschnitt und einem in Längsrichtung der Armatur in Richtung auf einen Drehgriff dahinter liegenden Bereich des Stellelementes können ein oder mehrere Radialbohrungen in dem Stellelement vorgesehen sein, die der Ableitung des Fluids aus der Zwischenspindel dienen. Zur Erhöhung der Dichtigkeit hat der Aufnahmeabschnitt umlaufende Vorsprünge. Diese sind an dem Innenumfang des Aufnahmeabschnitts vorgesehen. Die umlaufenden Vorsprünge können eine rein sich radial erstreckende Ausdehnung haben, d.h. als Radialringe ausgebildet sein. Sie können aber auch nach Art eines Gewindes vorgesehen sein, d.h. eine Schraubenlinie ausformen. Während bei der ersten Ausgestaltung eine gute Dichtwirkung erzielt werden kann, erlaubt die gewindeartige Ausgestaltung eine gute Montage- bzw. Demontage. Beim Schrauben der Stellhülse zieht sich diese in die hohle Zwischenspindel rein. Zur Optimierung können beide Konturen hintereinander bzw. ineinander vorgesehen sein.

Vorzugsweise ist die Spannhülse zumindest teilweise axial zur Überdeckung mit den umlaufenden Vorsprüngen bringbar. Hierdurch wird insgesamt die Dichtwirkung zwischen dem Stellelement und der Zwischenhülse vergrößert. Dem mit den umlaufenden Vorsprüngen versehenen Aufnahmeabschnitt ist üblicherweise an der Außenumfangsfläche ein Stützelement zugeordnet, beispielsweise ein Dichtring, der das Stellelement radial gegenüber dem Ventilgehäuse abstützt.

Mit Blick auf den verfahrensmäßigen Aspekt wird mit der vorliegenden Erfindung ein Verfahren zur Montage einer frostsicheren Auslaufarmatur nach Anspruch 11 angegeben. Bei dem Montageverfahren wird zunächst das Ventilgehäuse zusammen mit dem Zwischenrohr an einer Gebäudewand montiert, üblicherweise derart, dass das Zwischenrohr mit geringfügigem Längenüberstand die Außenseite der Gebäudewand überragt. Die als Kunststoffrohr ausgebildete Zwischenspindel wird auf Länge geschnitten und mit einem Ventiloberteil, welches dem Auslaufgehäuse zuzuordnen ist, verbunden. Hierzu hat die Spindel des Ventiloberteils einen Aufnahmeabschnitt, der üblicherweise die Zwischenspindel außenumfänglich umgibt. Der Aufnahmeabschnitt ist üblicherweise an dem der Zwischenspindel zugewandten Ende der Spindel des Auslaufgehäuses vorgesehen. Der Aufnahmeabschnitt kann mit Formschlusselementen versehen sein, die geeignet sind, eine Formschlussverbindung mit der zunächst glatten Außenumfangsfläche des Zwischenrohres einzugehen. Das Auslaufgehäuse kann zunächst mit dem Zwischenrohr verbunden werden und die Einheit aus Zwischenspindel und Ventiloberteil kann danach von der Außenseite durch das Auslaufgehäuse hindurch in das durch das Ventilgehäuse, das Zwischenrohr und das Auslaufgehäuse gebildete Gehäuse der Auslaufarmatur eingeschoben werden. Dabei legt sich die Spindel im Bereich des Ventilgehäuses üblicherweise an einer Anlagefläche an und ist damit innerhalb des Gehäuses axial fixiert. Bei einer alternativen Verfahrensführung kann das Auslaufgehäuse zusammen mit dem Ventiloberteil vormontiert sein und die Zwischenspindel im Rahmen der Montage mit dem Ventiloberteil verbunden werden. Danach wird die Zwischenspindel zusammen mit dem Auslaufgehäuse in bzw. an dem Zwischenrohr montiert, wobei das Auslaufgehäuse an dem Zwischenrohr befestigt wird.

Nach dem Befestigen des Auslaufgehäuses an dem Zwischenrohr wird jedenfalls eine Spannhülse in das Kunststoffrohr eingedrängt, um das Kunststoffrohr zwischen der Spannhülse und dem Aufnahmeabschnitt radial zu verpressen und damit fest mit der Spindel des Ventiloberteils zu verbinden. Die Spannhülse hat dazu bevorzugt ein konisch auslaufendes Segment, welches im Gewindeeingriff mit der Spindel des Ventiloberteils und derart an den Innendurchmesser des Kunststoffrohres angepasst ist, dass sich der konische vordere Bereich in das Zwischenrohr einbringen und mit fortschreitender axialer Bewegung gegen die Innenumfangsfläche des Kunststoffrohres anlegen und dagegen verpressen lässt. Die üblicherweise im Gewindeeingriff mit der Spindel des Ventiloberteiles stehende Spannhülse hat regelmäßig Funktionsflächen für das Eingreifen eines Werkzeuges, die mit einer in einer Stellspindel des Ventiloberteils ausgesparten Bohrung fluchten, sodass nach dem Verbinden des Auslaufgehäuses mit dem Zwischenrohr bei montiertem Ventiloberteil die Spannhülse in das Kunststoffrohr eingedrängt werden kann, um das Kunststoffrohr zwischen der Spannhülse und dem Aufnahmeabschnitt radial zu verpressen, um einerseits eine feste Verbindung zwischen dem Kunststoffrohr und der Spindel zu schaffen, und andererseits das Kunststoffrohr bevorzugt fluiddicht mit der Spindel zu verbinden.

Weitere Einzelheiten und Vorteile der vorliegenden Erfindung ergeben sich aus den nachfolgenden Ausführungsbeispielen in Verbindung mit der Zeichnung. In dieser Zeichnung ist
- Fig.1: eine Längsschnittansicht des Ausführungsbeispiels in geöffneter Stellung;
- Fig. 2: eine Längsschnittansicht des Ausführungsbeispiels in geschlossener Stellung;
- Fig. 3: eine Querschnittsansicht entlang der Linie III - III gemäß Fig. 2;
- Fig. 4: eine Querschnittsansicht entlang der Linie IV - IV gemäß der Darstellung in Fig. 2;
- Fig. 5a, 5b: eine Längsschnittansicht eines alternativen Ausführungsbeispiels des ventilseitigen Endes der Armatur, wobei die Armatur bei Fig. 5a geschlossen und bei Fig. 5b geöffnet sei;
- Fig. 6: eine Längsschnittansicht eines alternativen Ausführungsbeispiels eines Ventiloberteils vor der Montage in dem Auslaufgehäuse;
- Fig. 7: das in Fig. 6 dargestellte Ausführungsbeispiel nach Einschrauben in das Auslaufgehäuse und
- Fig. 8: das Ausführungsbeispiel nach Fig. 7 nach erfolgter Endmontage.

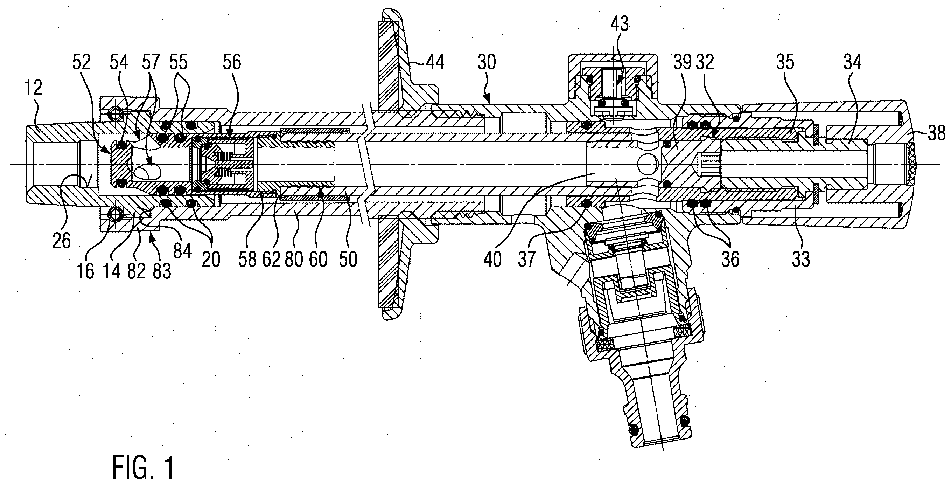

Die Figur 1 zeigt eine frostsichere Auslaufarmatur mit einem Ventilgehäuse 10, einem Auslaufgehäuse 30 und einer zwischen beiden Gehäusen 10, 30 angeordneten Zwischenspindel 50. Das Ventilgehäuse 10 umfasst ein metallisches Ventilsitzgehäuse 12, welches im Wesentlichen zylindrisch ausgeformt ist und an seinem Außenumfang durch einen Kragen 14 mit polygonaler Querschnittsform überragt ist. Das Ventilsitzgehäuse 12 ist in dem Einlaufende eines Zwischenrohres 80 axial fixiert.

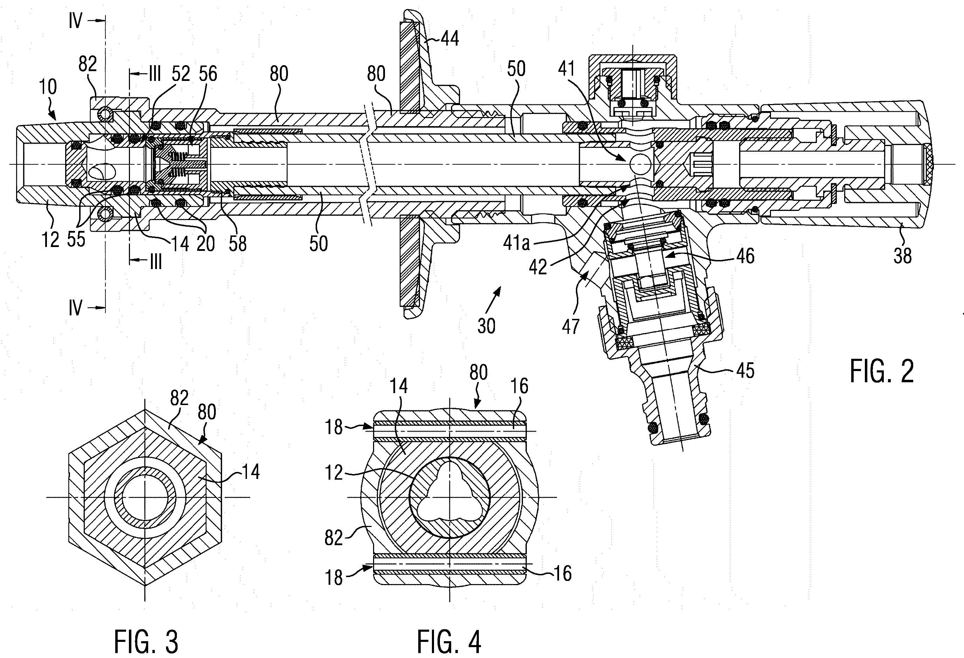

Hierzu formt das Zwischenrohr 80, welches die Zwischenspindel 50 umgibt, einteilig eine Verbreiterung 82 mit polygonaler Querschnittsform entsprechend der Querschnittsform des Kragens 14 (vgl. Fig. 3) aus. Die Verbreiterung 82 bildet an ihrem inneren Ende eine Axialschulter 84 aus, gegen welche der Kragen 14 anliegt. Auf seiner vorderen Stirnseite ist der Kragen 14 durch Sicherungsmittel in Form von zwei Stiften 16 in axialer Richtung fixiert, die in sich quer zur Längsachse des Zwischenrohres 80 erstreckenden Querbohrung 18 aufgenommen sind (vgl. Fig. 4). Das in dieser Weise axial fixierte Ventilsitzgehäuse 12 ist über zwei O-Ringe 20, die in am inneren Ende an dem Außenumfang des Ventilsitzgehäuses 12 ausgesparten Nuten eingesetzt sind, gegenüber dem Zwischenrohr 80 abgedichtet.

Die polygonale Außenumfangsfläche der Verbreiterung 82 bildet einen Sitz 83, auf den ein nicht gezeigter Befestigungskranz mit polygonaler Bohrung aufgeschoben werden kann. Der Befestigungskranz, das Zwischenrohr 80 sowie das Ventilsitzgehäuse 12 sind dementsprechend verdrehfest miteinander fixiert und an eine Gebäudewand fixierbar. Der Befestigungskranz hat zur Montage an der Gebäudewand mehrere auf dem Umfang verteilt vorgesehene Befestigungsbohrungen.

Das Ventilsitzgehäuse 12 bildet mit einer Innenumfangsfläche einen Ventilsitz 26 für die Anlage eines Ventilkörpers 52 aus. Der Ventilkörper 52 trägt an seinem einlaufseitigen Ende eine Dichtung 54 und ist an seinem gegenüberliegenden Ende als dünnwandiger Zylinder ausgeformt, der eine zylindrische Aufnahme für eine Rohrbelüfter-Patrone 56 und ein Innengewinde 58 ausformt, welches mit einer Verbindungshülse 60 im Gewindeeingriff ist, die endseitig in die Zwischenspindel 50 bis zu einem Kragen 62 der Verbindungshülse 60 eingeschoben und verdrehfest und axial festgelegt mit der Zwischenspindel 50 verbunden ist, insbesondere darin verpresst ist. Das Ventilsitzgehäuse 12 ist gegenüber dem Ventilkörper 52 über zwei Dichtringe 55 abgedichtet, die in an den Ventilkörper 52 ausgesparten Nuten gehalten sind. Zwischen diesen Dichtringen 55 und der Dichtung 54 sind an dem Ventilkörper 52 mehrere sich radial öffnende Bohrungen vorgesehen, die Einlässe 57 ausbilden, die zu der hohlen Zwischenspindel 50 führen.

Das Auslaufgehäuse 30 entspricht im Wesentlichen der aus der EP 2 479 462 A2 bekannten Gestaltung und weist ein Ventiloberteil 32 mit einer Führungshülse 33 auf, an welcher eine Stellspindel 34 drehbar, jedoch axial festgelegt gehalten ist. Diese Stellspindel 34 ist im Gewindeeingriff mit einer hohlen Spindel 35, die ein Beispiel für ein Stellelement im Sinne der vorliegenden Erfindung ist, welches einseitig von der Stellspindel 34 durchsetzt und auf der gegenüberliegenden Seite die Zwischenspindel 50 endseitig aufnimmt. Über zwei O-Ringe 36 ist die Spindel 35 auf Seiten eines verdrehfest mit der Stellspindel 34 verbundenen Drehgriffs 38 gegenüber der Führungshülse 33 abgedichtet, indes axial verschieblich vorgesehen. Auf der gegenüberliegenden Seite befindet sich ein weiterer O-Ring 37, über welchen die Spindel 35 gegenüber einer Innenumfangsbohrung des Auslaufgehäuses 30 abgedichtet ist. In der Spindel 35 ist als Endstopfen eine ein Zentrierelement ausbildende Spannhülse 39 vorgesehen, welche in der Spindel 35 im Gewindeeingriff und damit axial verschieblich gehalten ist und welche den Durchgang durch die Spindel 35 in Richtung auf den Drehgriff 38 verlegt. Die Spannhülse 39 weist ein Zylindersegment 40 auf, das einteilig an der Spannhülse 39 angeordnet und mit mehreren Radialbohrungen 41 versehen ist, die mit mehreren, an der Spindel 35 ausgesparten radialen Bohrungen, die Auslässe 42 bilden, fluchten. Zwischen den Bohrungen 41, 42 ist ein Hohlraum für den Durchtritt des Mediums vorgesehen, so dass das Medium radial durch die Bohrungen 41, 42 auch dann fließen kann, wenn diese nicht fluchten. In etwa in axialer Höhe dieser Bohrungen 41, 42 befindet sich ein Belüfter 43, der abhängig von dem Innendruck Luft durch die Bohrungen 41, 42 in die Zwischenspindel 50 einleitet oder aber bei einem in dem Auslaufgehäuse 30 wirkenden Überdruck des Fluids verschlossen ist, sodass das Fluid nicht durch den Belüfter 43 austreten kann.

Wie die Figuren 1 und 2 verdeutlichen ist das Auslaufgehäuse 30 mit dem auslaufgehäuseseitigen Ende des Zwischenrohres 80 verschraubt. Die Verschraubung erfolgt ohne Dichtmittel. In etwa auf Höhe dieser Verbindungsstelle ist eine mit dem Zwischenrohr 80 verschraubte Rosette 44 erkennbar.

Mit dieser Ausgestaltung ergibt sich, dass das Fluid durch die Auslaufarmatur unter Umgehung des Ringraumes hindurch geleitet wird, der zwischen der Zwischenspindel 50 und dem Zwischenrohr 80 ausgespart ist. Vielmehr strömt das Fluid in Längsrichtung der Armatur allein durch den hohlen Innenraum der Zwischenspindel 50. Das Fluid tritt an der Einlassseite durch die Einlässe 57 des Ventilkörpers 52 ein, passiert die Rückflussverhinderer-Patrone 56 und die Verbindungshülse 60, durchläuft die hohle Zwischenspindel 50 und tritt radial durch die Radialbohrungen 41 und die Auslässe 42 aus.

Auf dieser Höhe ist das Auslaufgehäuse 30 von einer Schlauchverschraubung 45 zum Anschluss eines Wasserschlauches überragt, welcher unter Zwischenlage eines Rohrbelüfters 46 in das metallische Auslaufgehäuse 30 eingeschraubt ist, welches zwischen der Schlauchverschraubung 45 und dem Rohrbelüfter 46 mit einer Belüftungsbohrung 47 versehen ist. Im Falle eines Rückflusses entgegen der eigentlichen Strömungsrichtung von einem Schlauch in die Schlauchverschraubung 45 versperrt der Rohrbelüfter 46 den Durchgang zu der Spindel 35, sodass das Fluid nicht in die Zwischenspindel 50 gelangen kann, sondern durch die Belüftungsbohrung 47 abgeführt wird.

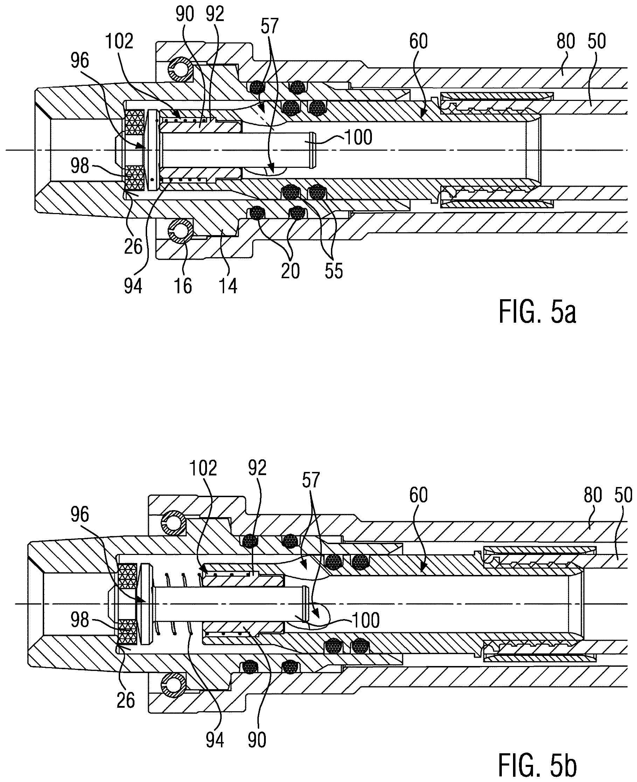

Eine ventilgehäuseseitige Abwandlung gegenüber dem zuvor diskutierten ersten Ausführungsbeispiel ist in den Figuren 5a und 5b gezeigt. Soweit möglich sind gleiche Bauteile mit gleichen Bezugszeichen versehen.

Dabei kennzeichnet Bezugszeichen 60 in den Figuren 5a und 5b eine alternative Ausgestaltung einer Verbindungshülse, die in der zuvor beschriebenen Weise mit der Zwischenspindel 50 verbunden und gegenüber dem Ventilsitzgehäuse 12 über die Dichtringe 55 abgedichtet ist. Die Verbindungshülse 60 bildet mehrere, auf dem Umfang verteilte Einlässe 57 aus. Ein Endbereich der Verbindungshülse 60 ist im Durchmesser verringert, so dass Fluid durch einen Ringspalt zwischen dem Ventilsitzgehäuse 12 und der Verbindungshülse 60 zu den Einlässen 57 gelangen kann. Innerhalb dieser Spitze befindet sich eine Ventilführungshülse 90, die im Wesentlichen als zylindrischer Körper mit einer radial nach Außen abragenden Ringschulter 92 ausgebildet ist. Die Ringschulter 92 stützt sich formschlüssig an einer korrespondierend hierzu an der Verbindungshülse 60 ausgeformten Ringfläche ab. An der gegenüberliegenden Seite sitzt auf der Ringschulter 92 eine Schraubenfeder 94 auf, deren anderes Ende gegen einen abragenden Kragen eines Ventilkegelkörpers 96 anliegt. Auf der der Schraubenfeder 94 gegenüberliegenden Seite ist eine Flachdichtung 98 angeordnet, die mit dem mit Bezugszeichen 26 gekennzeichneten Ventilsitz in der in Fig. 5a gezeigten geschlossenen Darstellung der Armatur zusammenwirkt.

Der Ventilkegelkörper 96 bildet an seinem der Flachdichtung 89 gegenüberliegenden Ende ein stabförmiges Führungselement 100 aus, welches eine in der Ventilführungshülse 90 ausgesparte Durchgangsbohrung durchsetzt und endseitig beispielsweise durch Verstemmen verbreitert ist, so dass der Ventilkegelkörper 96 beidseitig formschlüssig die Ventilführungshülse 90 umgreift.

Der Innenumfang der Verbindungshülse 60 bildet zusammen mit dem Außenumfang der Ventilführungshülse 90 einen Ringspalt 102 aus, in dem die Schraubenfeder 94 gehalten ist, die gegen den Kragen des Ventilkegelkörpers 96 anliegt und diesen in Richtung auf den Ventilsitz 26 vorspannt. In Fig. 5a ist diese Schraubenfeder 94 maximal komprimiert. Der Kragen des Ventilkegelkörpers 96 liegt an dem stirnseitigen Ende der Verbindungshülse 60 an. Die hierzu notwendige Druckkraft wird über die Flachdichtung 98 vermittelt, die an dem Ventilsitz 26 anliegt.

In der in Fig. 5b gezeigten Lage ist die Armatur offen. Die Schraubenfeder 94 ist entspannt. Die Flachdichtung 98 liegt unter Spannung dieser Federkraft an dem Ventilsitz 26 an. Ist der eingangsseitige Druck des Wassers höher als die Summe aus Federkraft und Wasserdruck in der Zwischenspindel, so wird die Flachdichtung 98 unter Kompression der Schraubenfeder 94 von dem Ventilsitz abgehoben. Ist indes die Druckdifferenz zwischen der Eingangsseite und dem Inneren der Zwischenspindel 50 multipliziert mit der Projektionsfläche am Eingang geringer als die Kraft der Schraubenfeder 94, so bleibt die dichtende Anlage der Flachdichtung 98 an dem Ventilsitz 26 erhalten. Die Ausgestaltung wirkt danach als Rückflussverhinderer. Diese Wirkung ist in Fig. 5b visualisiert.

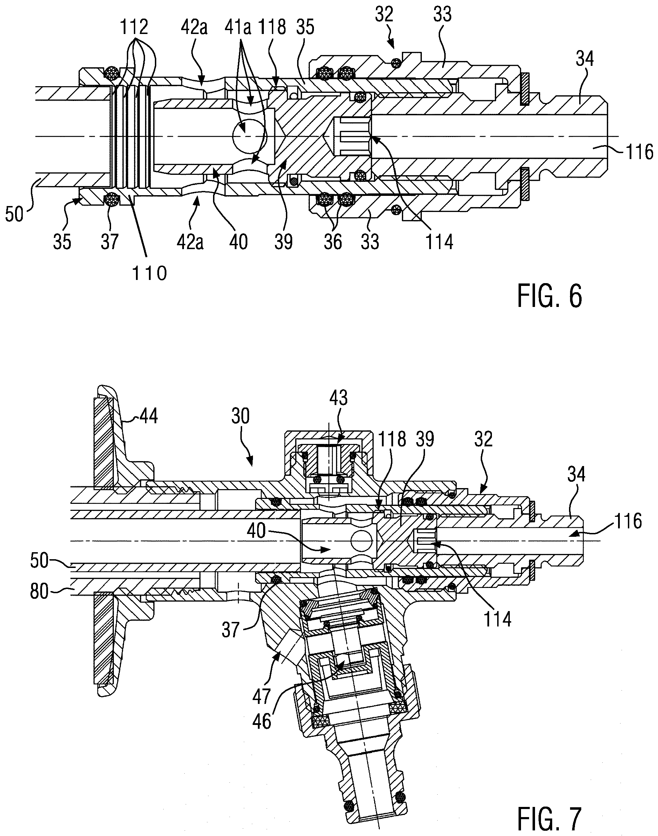

Die Figuren 6 bis 8 zeigen das Fügen des Ventiloberteils 32 und der Zwischenspindel 50.

Bei Fig. 6 ist die Zwischenspindel 50 mit einer Ablänghilfe abgelängt worden. Sie befindet sich aber noch wie das Ventiloberteil 32 außerhalb des Auslaufgehäuses. Die Zwischenspindel 50 wird endseitig in einen in Fig. 6 mit Bezugszeichen 110 gekennzeichneten Aufnahmeabschnitt der Spindel 35 eingeschoben. Dieser Aufnahmeabschnitt 110 hat an seinem Innenumfang umlaufende Vorsprünge 112, die sich dichtend an den Außenumfang der Zwischenspindel 50 im Rahmen der Montage legen. Wie Fig. 6 verdeutlicht, ist der Aufnahmeabschnitt 110 verdickt gegenüber einem in Strömungsrichtung dahinter liegenden Bereich der Spindel 35 ausgebildet, der die Radialbohrung 41a aufweist. Der Aufnahmeabschnitt 110 trägt an seinem Außenumfang die bereits zuvor erwähnte Dichtung 37, über welche die Spindel 35 mit dem Auslaufgehäuse 30 dichtend zusammenwirkt.

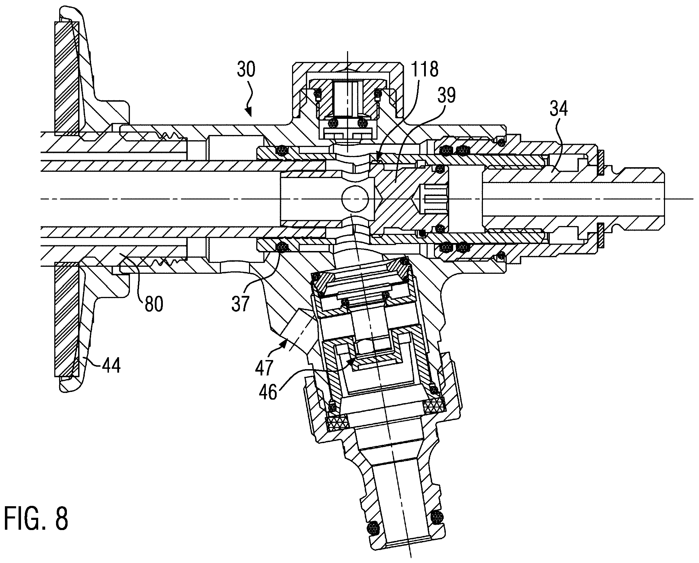

Die Montage der erfindungsgemäßen Auslaufarmatur wird in den Fig. 7 und 8 gezeigt. Dabei wird das Zwischenrohr 80 gekürzt, welches die Außenwand des Gebäudes außenseitig überragt. Danach wird die Rosette 44 auf das Zwischenrohr 80 aufgeschraubt. Das Auslaufgehäuse 30 wird mit dem Zwischenrohr 80 verbunden. Die Zwischenspindel 50 wird auf Länge geschnitten und mit dem Ventiloberteil 32 verbunden. Dazu wird die Zwischenspindel 50 endseitig in den Aufnahmeabschnitt 110 eingeschoben, sodass die umlaufenden Vorsprünge 112 sich gegen die außenumfangsfläche der Zwischenspindel legen. Danach ist die Zwischenspindel 50 mit dem Ventiloberteil 32 vorläufig verbunden. Vorzugsweise wird diese vormontierte Einheit von außen in das Auslaufgehäuse 30 eingeschoben. Das Ventiloberteil 32 wird in das Auslaufgehäuse eingeschraubt (vgl. Fig. 7).

Wie Fig. 6 erkennen lässt, hat die Spannhülse 39 an ihrer dem Zylindersegment 40 gegenüberliegenden Seite eine stirnseitige Bohrung, die mit Funktionsflächen für einen Innensechskantschlüssel versehen ist und dementsprechend eine Werkzeugaufnahme 114 ausbildet. Fluchtend mit dieser Werkzeugaufnahme 114 weist die Stellspindel 34 eine zentrische Bohrung 116 auf, die von außen zu der Werkzeugaufnahme 114 führt. Die Spannhülse 39 steht über ein an der Spindel 35 ausgebildetes Innengewinde mit der Spindel 35 im Gewindeeingriff. Die gewindemäßige Verbindung ist in Fig. 6 mit Bezugszeichen 118 gekennzeichnet. Dabei befindet sich die Spannhülse 39 in Fig. 6 in einer Endstellung, in der die Spannhülse am weitesten von der Zwischenspindel 50 entfernt ist.

Nach dem in Fig. 7 verdeutlichten Zusammenbau der Bauteile wird über die Werkzeugaufnahme 114 die Spannhülse 39 geschraubt. Aufgrund des Gewindeeingriffs 118 bewegt sich die Spannhülse 39 in Richtung auf die Zwischenspindel 50 und wird in die Zwischenspindel hereingedrängt, die bereits durch das Verschrauben des Auslaufgehäuses 30 über das Zwischenrohr 80 mit dem Ventilgehäuse 10 verbunden worden ist. So überdeckt das stirnseitige Ende des Zwischenrohres 50 durch Einschrauben des Ventiloberteils 32 in das Auslaufgehäuse 30 und zu Beginn der Schraubbewegung der Spannhülse 39 sämtliche radialen Vorsprünge 112, die an dem Innenumfang des Aufnahmeabschnitts 110 vorgesehen sind, was sich aus dem Vergleich der Figuren 6 und 7 unmittelbar ergibt.

Durch das Verschrauben der Spannhülse wird diese in die Zwischenspindel 50 gedrängt. Der leicht konische vordere Bereich der Spannhülse 39 presst und weitet die Zwischenspindel 50 radial auf und verstärkt somit zum einen die dichtende Anlage gegen die Vorsprünge 112 im Aufnahmeabschnitt 110 und bewirkt zum anderen eine unverlierbare Verbindung zwischen der Zwischenspindel 50 und der Spindel 35. Bei dieser axialen Beanspruchung der Zwischenspindel 50 wird diese auf Seiten des Ventilgehäuses widergelagert. Die Widerlagerung kann beispielsweise über den Ventilsitz 26 erfolgen. Es ergibt sich bei der aus Kunststoff gebildeten Zwischenspindel 50 auch eine formschlüssige Verbindung zwischen den radialen Vorsprüngen 112 des Aufnahmeabschnittes 110 und der Zwischenspindel, nachdem die Spannhülse 39 maximal in die Zwischenspindel 50 eingepresst worden ist (vgl. Figur 8). Denn als Ergebnis dieses Einpressens wird die Zwischenspindel 50 auch radial geweitet.

In dieser Weise montiert ist die Armatur nunmehr betriebsbereit und Wasser kann gezapft werden.

### Bezugszeichenliste

- 10: Ventilgehäuse
- 12: Ventilsitzgehäuse
- 14: Kragen
- 16: Stift
- 18: Querbohrung
- 20: O-Ring
- 26: Ventilsitz
- 30: Auslaufgehäuse
- 32: Ventiloberteil
- 33: Führungshülse
- 34: Stellspindel
- 35: Spindel
- 36: O-Ring
- 37: O-Ring
- 38: Drehgriff
- 39: Spannhülse
- 40: Zylindersegment
- 41: Radialbohrung
- 42: Auslass
- 43: Belüfter
- 44: Rosette
- 45: Schlauchverschraubung
- 46: Rohrbelüfter
- 47: Belüftungsbohrung
- 50: Zwischenspindel
- 52: Ventilkörper
- 54: Dichtung
- 55: Dichtring
- 56: Rückflussverhinderer-Patrone
- 57: Einlass
- 58: Innengewinde
- 60: Verbindungshülse
- 62: Kragen
- 80: Zwischenrohr
- 82: Verbreiterung
- 83: Sitz
- 84: Axialschulter
- 90: Ventilführungshülse
- 92: Ringschulter
- 94: Schraubenfeder
- 96: Ventilkegelkörper
- 98: Flachdichtung
- 100: Führungselement
- 102: Ringspalt
- 110: Aufnahmeabschnitt
- 112: Vorsprung
- 114: Werkzeugaufnahme
- 116: Bohrung
- 118: Gewindeeingriff

## Patentansprüche

1. Frostsichere Auslaufarmatur mit einem Ventilgehäuse (10), welches einen Ventilsitz (26) ausbildet, einem Auslaufgehäuse (30) und einer Zwischenspindel (50), die in einem Zwischenrohr (80) aufgenommen ist, welches das Auslaufgehäuse (30) mit dem Ventilgehäuse (10) verbindet, wobei
die Zwischenspindel (50) als Hohlspindel ausgebildet ist und wobei in dem Auslaufgehäuse (30) ein Ventiloberteil (32) mit einer mit dem Auslaufgehäuse (30) fest verbundenen Führungshülse (33) und einer daran verdrehbar jedoch axial festgelegt gehaltenen Stellspindel (34) vorgesehen ist, die mit einem abgedichtet in dem Auslaufgehäuse (30) vorgesehenen Stellelement (35) im Gewindeeingriff steht, das eine Aufnahme für die Stellspindel (34) ausbildet,
**dadurch gekennzeichnet,**
**dass** die Zwischenspindel (50) einen Strömungsweg für das Fluid von dem Ventilgehäuse (10) zu dem Auslaufgehäuse (30) ausformt und durch ein Kunststoffrohr gebildet ist,
**dass** das Stellelement (35) einen Auslass (42) ausbildet, der zwischen zwei das Stellelement (35) gegenüber dem Auslaufgehäuse (30) abdichtenden Dichtelementen (36, 37) vorgesehen ist, und
**dass** die frostsichere Auslaufarmatur eine endseitig in die Zwischenspindel (50) eingreifende Spannhülse (39) aufweist, welche auf Höhe des Auslasses (42) eine Radialbohrung (41) aufweist und dichtend in das Stellelement (35) eingesetzt ist.

2. Frostsichere Auslaufarmatur nach Anspruch 1, **gekennzeichnet durch** einen zusammenhängenden Ringraum, der sich im Wesentlichen über die gesamte Länge der Zwischenspindel erstreckt.

3. Frostsichere Auslaufarmatur nach Anspruch 1 oder 2, **dadurch gekennzeichnet, dass** die Zwischenspindel (50) ventilsitzseitig mit einer in die Zwischenspindel (50) eingreifenden Verbindungshülse (60) verbunden ist, die unter Einschluss einer Rückflussverhinderer-Patrone (56) mit einem zumindest einen in die Zwischenspindel (50) führenden Einlass (57) aufweisenden Ventilkörper (52) verbunden ist, der gegenüber dem Zwischenrohr (80) abgedichtet und beweglich zu diesem vorgesehen ist.

4. Frostsichere Auslaufarmatur nach Anspruch 3, **dadurch gekennzeichnet, dass** der Ventilkörper (52) einen den Einlass (57) überragenden Dichtring (54) trägt, der zum Verschluss der Auslaufarmatur mit einem von dem Ventilgehäuse (10) ausgebildeten Ventilsitzgehäuse (12) zusammenwirkt, das gegenüber dem Zwischenrohr (80) abgedichtet und daran befestigt ist.

5. Frostsichere Auslaufarmatur nach einem der vorherigen Ansprüche, **gekennzeichnet durch** einen federbelasteten Ventilkegelkörper (96), der in Richtung auf den Ventilsitz (26) vorgespannt und in einer mit der Zwischenspindel verbundenen Ventilführungshülse (90) geführt ist.

6. Frostsichere Auslaufarmatur nach Anspruch 5, **dadurch gekennzeichnet, dass** ein dem Ventilsitz (26) gegenüberliegendes Ende des Ventilkegelkörpers (96) als Führungselement (100) ausgebildet ist, welches die Ventilführungshülse (90) durchragt und formschlüssig dagegen verriegelt ist und
dass die Ventilführungshülse (90) über eine Ringschulter (92) relativ zu der Zwischen-spindel (50) abgestützt ist und dass an der Außenseite der Ventilführungshülse (90) ein Ringspalt (102) ausgebildet ist, in dem eine sich an der Ringschulter (92) abstützende Feder (94) vorgesehen ist.

7. Frostsichere Auslaufarmatur nach einem der vorherigen Ansprüche, **dadurch gekennzeichnet, dass** das Ventiloberteil (32) die in die Zwischenspindel (50) eingreifende und in die Zwischenspindel (50) einpressbare Spannhülse (39) aufweist, die in dem Stellelement (35) im Gewindeeingriff (118) gehalten und durch eine Bohrung (116) der außen an dem Auslaufgehäuse (30) freiliegenden Stellspindel (34) schraubbar ist.

8. Frostsichere Auslaufarmatur nach einem der vorherigen Ansprüche, **dadurch gekennzeichnet, dass** das Stellelement (35) einen vorderen Aufnahmeabschnitt (110) aufweist, der zur Festlegung der Zwischenspindel (50) einen an den Außendurchmesser der Zwischenspindel angepassten und dichtend an die Zwischenspindel (50) anlegbaren Innendurchmesser hat.

9. Frostsichere Auslaufarmatur nach Anspruch 8, **dadurch gekennzeichnet, dass** der Aufnahmeabschnitt (110) eine mit umlaufenden Vorsprüngen (112) versehene Innenumfangsfläche hat.

10. Frostsichere Auslaufarmatur nach Anspruch 9, **dadurch gekennzeichnet, dass** die Spannhülse (39) axial zumindest teilweise mit den umlaufenden Vorsprüngen (112) zur Überdeckung bringbar ist.

11. Verfahren zur Montage einer frostsicheren Auslaufarmatur mit einem einen Ventilsitz (26) ausbildendem Ventilgehäuse (10), einem Auslaufgehäuse (30), einem das Ventilgehäuse (10) mit dem Auslaufgehäuse (30) verbindendem Zwischenrohr (80) und einer als Kunststoffrohr ausgebildeten Zwischenspindel (50), welche in dem Zwischenrohr (80) aufgenommen ist, wobei das mit dem Ventilgehäuse (10) verbundene Zwischenrohr (80) an einer Gebäudewand montiert wird, die als Kunststoffrohr ausgebildete Zwischenspindel (50) auf Länge geschnitten und in einen Aufnahmeabschnitt (110) eines Stellelements (35) eines in das Auslaufgehäuse (30) einzusetzenden Ventiloberteils (32) eingebracht wird und wobei nach dem Befestigen des Auslaufgehäuses (30) an dem Zwischenrohr (80) eine Spannhülse (39) in das Kunststoffrohr (50) eingedrängt wird, um das Kunststoffrohr (50) zwischen der Spannhülse (39) und dem Aufnahmeabschnitt (110) radial zu verpressen.

12. Verfahren nach Anspruch 11, **dadurch gekennzeichnet, dass** das Kunststoffrohr (50) zunächst mit dem Ventiloberteil (32) verbunden wird und danach das Kunststoffrohr (50) mit dem Ventiloberteil (32) in das Auslaufgehäuse (30) eingeschoben wird.

## Claims

1. Frost-proof outlet fitting comprising a valve housing (10), which forms a valve seat (26), an outlet housing (30) and an intermediate shaft (50), which is received in an intermediate pipe (80) that connects the outlet housing (30) to the valve housing (10),
the intermediate shaft (50) being in the form of a hollow shaft, and a top part (32) of the valve, which has a guide sleeve (33) rigidly connected to the outlet housing (30) and an adjustment shaft (34) which is held so as to be rotatable thereon yet axially fixed, being provided in the outlet housing (30), which adjustment shaft is in threaded engagement with an adjustment element (35) that is provided so as to be sealed off in the outlet housing (30) and forms a recess for the adjustment shaft (34),
**characterised in that**
the intermediate shaft (50) forms a flow path for the fluid from the valve housing (10) to the outlet housing (30) and is formed by a plastics pipe,
**in that** the adjustment element (35) forms an outlet means (42) that is provided between two seal elements (36, 37) which seal off the adjustment element (35) from the outlet housing (30), and
**in that** the frost-proof outlet fitting comprises a clamping socket (39) that engages in the end of the intermediate shaft (50) and has a radial hole (41) at the level of the outlet means (42) and is sealingly inserted into the adjustment element (35).

2. Frost-proof outlet fitting according to claim 1, **characterised by** a continuous annular chamber that extends substantially over the entire length of the intermediate shaft.

3. Frost-proof outlet fitting according to either claim 1 or claim 2, **characterised in that** the intermediate shaft (50) is connected on the valve-seat side to a connection sleeve (60) that engages with the intermediate shaft (50) and is connected, by means of including a non-return valve cartridge (56), to a valve body (52), which comprises at least one inlet (57) leading into the intermediate shaft (50), which valve body is provided so as to be sealed off from the intermediate pipe (80) and movable relative thereto.

4. Frost-proof outlet fitting according to claim 3, **characterised in that** the valve body (52) carries a sealing ring (54) that protrudes over the inlet (57) and interacts with a valve seat housing (12), formed by the valve housing (10), in order to close the outlet fitting, which valve housing is sealed off from the intermediate pipe (80) and is fastened thereon.

5. Frost-proof outlet fitting according to any of the preceding claims, **characterised by** a spring-loaded valve face element (96) that is preloaded towards the valve seat (26) and is guided in a valve guide sleeve (90) connected to the intermediate shaft.

6. Frost-proof outlet fitting according to claim 5, **characterised in that** an end of the valve face element (96) that is opposite the valve seat (26) is formed as a guide element (100) which protrudes through the valve guide sleeve (90) and is form-fittingly locked against said valve guide sleeve, and
**in that** the valve guide sleeve (90) is supported relative to the intermediate shaft (50) by means of an annular shoulder (92) and **in that** an annular gap (102) is formed on the outside of the valve guide sleeve (90), in which gap a spring (94), supported on the annular shoulder (92), is provided.

7. Frost-proof outlet fitting according to any of the preceding claims, **characterised in that** the top part (32) of the valve comprises the clamping socket (39) that engages in the intermediate shaft (50) and can be pushed into the intermediate shaft (50), and which is held in threaded engagement (118) in the adjustment element (35) and can be screwed through a hole (116) in the adjustment shaft (34) that is exposed on the outside of the outlet housing (30).

8. Frost-proof outlet fitting according to any of the preceding claims, **characterised in that** the adjustment element (35) has a front receiving portion (110) which, in order to fix the intermediate shaft (50), has an internal diameter that is adapted to the external diameter of the intermediate shaft and can be sealingly placed against the intermediate shaft (50).

9. Frost-proof outlet fitting according to claim 8, **characterised in that** the receiving portion (110) has an inner circumferential face that is provided with circumferential projections (112).

10. Frost-proof outlet fitting according to claim 9, **characterised in that** the clamping socket (39) can be made to axially overlap the circumferential projections (112), at least in part.

11. Method for mounting a frost-proof outlet fitting having a valve housing (10) that forms a valve seat (26), an outlet housing (30), an intermediate pipe (80) connecting the valve housing (10) to the outlet housing (30), and an intermediate shaft (50), in the form of a plastics pipe, that is received in the intermediate pipe (80), wherein the intermediate pipe (80) connected to the valve housing (10) is mounted on a building wall, the intermediate shaft (50), in the form of a plastics pipe, is cut to length and is introduced into a receiving portion (110) of an adjustment element (35) of a top part (32) of a valve to be inserted into the outlet housing (30), and wherein, once the outlet housing (30) has been fastened to the intermediate pipe (80), a clamping socket (39) is pressed into the plastics pipe (50) in order to radially press the plastics pipe (50) between the clamping socket (39) and the receiving portion (110).

12. Method according to claim 11, **characterised in that** the plastics pipe (50) is first connected to the top part (32) of the valve and subsequently the plastics pipe (50) pushed into the outlet housing (30) together with the top part (32) of the valve.

## Revendications

1. Robinetterie d'écoulement ou de puisage antigel, comprenant un corps de soupape (10), qui forme un siège de soupape (26), un corps de sortie d'écoulement (30), et une broche intermédiaire (50), qui est logée dans un tube intermédiaire (80) reliant le corps de sortie d'écoulement (30) au corps de soupape (10), robinetterie d'écoulement
dans laquelle la broche intermédiaire (50) est réalisée sous forme de broche creuse, et
dans laquelle à l'intérieur du corps de sortie d'écoulement (30) il est prévu une partie supérieure de soupape (32) comportant une douille de guidage (33) liée de manière fixe au corps de sortie d'écoulement (30), et une broche de réglage (34), qui y est maintenue de manière rotative mais fixée axialement, et qui est en prise par filetage avec un élément de réglage (35) prévu de manière étanche dans le corps de sortie d'écoulement (30) et formant un logement d'accueil pour la broche de réglage (34),
**caractérisée**
**en ce que** la broche intermédiaire (50) forme un chemin d'écoulement pour le fluide à partir du corps de soupape (10) vers le corps de sortie d'écoulement (30) et est formée par un tube de matière plastique,
**en ce que** l'élément de réglage (35) forme une sortie (42), qui est prévue entre deux éléments d'étanchéité (36, 37) assurant l'étanchéité de l'élément de réglage (35) par rapport au corps de sortie d'écoulement (30), et
**en ce que** la robinetterie d'écoulement ou de puisage antigel comporte une douille de serrage (39), qui s'engage dans l'extrémité terminale de la broche intermédiaire (50), et qui présente, à hauteur de la sortie (42), un alésage radial (41) et est insérée de manière étanche dans l'élément de réglage (35).

2. Robinetterie d'écoulement antigel selon la revendication 1, **caractérisée par** une chambre annulaire continue, qui s'étend sensiblement sur toute la longueur de la broche intermédiaire.

3. Robinetterie d'écoulement antigel selon la revendication 1 ou la revendication 2, **caractérisée en ce que** la broche intermédiaire (50) est reliée, du côté du siège de soupape, à une douille de liaison (60), qui s'engage dans la broche intermédiaire (50), et qui, avec interposition d'une cartouche anti-retour (56), est reliée à un corps d'obturation de soupape (52), qui présente au moins une entrée (57) menant dans la broche intermédiaire (50) et qui est prévu de manière étanche par rapport au tube intermédiaire (80) et de manière mobile par rapport à celui-ci.

4. Robinetterie d'écoulement antigel selon la revendication 3, **caractérisée en ce que** le corps d'obturation de soupape (32) porte un anneau d'étanchéité (54) surmontant l'entrée (57), qui, pour la fermeture de la robinetterie d'écoulement, interagit avec un corps de siège de soupape (12) formé par le corps de soupape (10) et qui est étanche par rapport au tube intermédiaire (80) et est fixé à celui-ci.

5. Robinetterie d'écoulement antigel selon l'une des revendications précédentes, **caractérisée par** un corps conique d'obturation de soupape (96) chargé par ressort, qui est précontraint en direction du siège de soupape (26) et est guidé dans une douille de guidage de soupape (90) liée à la broche intermédiaire.

6. Robinetterie d'écoulement antigel selon la revendication 5, **caractérisée en ce qu'**une extrémité du corps conique d'obturation de soupape (96), qui est opposée à celle dirigée vers le siège de soupape (26), est réalisée sous forme d'élément de guidage (100), qui traverse la douille de guidage de soupape (90) et est verrouillé par complémentarité de formes relativement à celle-ci, et
**en ce que** la douille de guidage de soupape (90) prend appui, par l'intermédiaire d'un épaulement annulaire (92), par rapport à la broche intermédiaire (50), et **en ce que** sur le côté extérieur de la douille de guidage de soupape (90) est formé un interstice annulaire (102) dans lequel est prévu un ressort (94) s'appuyant sur l'épaulement annulaire (92).

7. Robinetterie d'écoulement antigel selon l'une des revendications précédentes, **caractérisée en ce que** la partie supérieure de soupape (32) comprend la douille de serrage (39) s'engageant dans la broche intermédiaire (50) et pouvant être pressée dans la broche intermédiaire (50), et qui est maintenue en prise par filetage (118) dans l'élément de réglage (35) et peut être vissée à travers un alésage (116) de la broche de réglage (34) librement accessible à l'extérieur du corps d'écoulement de sortie (30).

8. Robinetterie d'écoulement antigel selon l'une des revendications précédentes, **caractérisée en ce que** l'élément de réglage (35) présente un tronçon d'accueil avant (110), qui, pour assurer la fixation de la broche intermédiaire (50), possède un diamètre intérieur adapté au diamètre extérieur de la broche intermédiaire et pouvant s'appliquer de manière étanche contre la broche intermédiaire (50).

9. Robinetterie d'écoulement antigel selon la revendication 8, **caractérisée en ce que** le tronçon d'accueil (110) présente une surface périphérique intérieure munie de protubérances périphériques (112).

10. Robinetterie d'écoulement antigel selon la revendication 9, **caractérisée en ce que** la douille de serrage (39) peut être amenée au moins partiellement en recouvrement axial avec les protubérances périphériques (112) .

11. Procédé de montage d'une robinetterie d'écoulement ou de puisage antigel, comprenant un corps de soupape (10), qui forme un siège de soupape (26), un corps de sortie d'écoulement (30), un tube intermédiaire (80) reliant le corps de soupape (10) au corps de sortie d'écoulement (30), et une broche intermédiaire (50) réalisée sous forme de tube de matière plastique, qui est logée dans le tube intermédiaire (80), procédé d'après lequel on monte le tube intermédiaire (80) relié au corps de soupape (10), dans un mur de bâtiment, on coupe à longueur la broche intermédiaire (50) réalisée sous la forme d'un tube de matière plastique et on l'insère dans un tronçon d'accueil (110) d'un élément de réglage (35) d'une partie supérieure de soupape (32) à mettre en place dans le corps de sortie d'écoulement (30), et d'après lequel, après fixation du corps de sortie d'écoulement (30) au tube intermédiaire (80), on insère une douille de serrage (39) dans le tube de matière plastique (50), en vue d'enserrer par pressage radial le tube de matière plastique (50) entre la douille de serrage (39) et le tronçon d'accueil (110).

12. Procédé selon la revendication 11, **caractérisé en ce que** le tube de matière plastique (50) est tout d'abord relié à la partie supérieure de soupape (32), et le tube de matière plastique (50) est ensuite inséré, avec la partie supérieure de soupape (32), dans le corps de sortie d'écoulement (30).
